(19) Europäisches Patentamt
European Patent Office
Office européen des brevets

(11) **EP 1 516 069 B1**

(12) **EUROPÄISCHE PATENTSCHRIFT**

(45) Veröffentlichungstag und Bekanntmachung des Hinweises auf die Patenterteilung:
**05.08.2009   Patentblatt 2009/32**

(51) Int Cl.:
***C22C 14/00*** *(2006.01)*

(21) Anmeldenummer: **03729896.5**

(22) Anmeldetag: **28.05.2003**

(86) Internationale Anmeldenummer:
**PCT/DE2003/001790**

(87) Internationale Veröffentlichungsnummer:
**WO 2003/101697 (11.12.2003 Gazette 2003/50)**

(54) **HOCHFESTE, PLASTISCH VERFORMBARE FORMKÖRPER AUS TITANLEGIERUNGEN**

HIGH-TENSILE, PLASTICALLY DEFORMABLE MOULDED BODY CONSISTING OF TITANIUM ALLOYS

CORPS MOULES EN ALLIAGES DE TITANE, A HAUTE RIGIDITE ET DEFORMABLES PLASTIQUEMENT

(84) Benannte Vertragsstaaten:
**AT BE BG CH CY CZ DE DK EE ES FI FR GB GR HU IE IT LI LU MC NL PT RO SE SI SK TR**

(30) Priorität: **30.05.2002   DE 10224722**

(43) Veröffentlichungstag der Anmeldung:
**23.03.2005   Patentblatt 2005/12**

(73) Patentinhaber: **Leibnitz-Institut für Festkörper- und Werkstoffforschung Dresden e.V.
01069 Dresden (DE)**

(72) Erfinder:
  • **HE, Guo
    Shangai 200030 (CN)**
  • **LÖSER, Wolfgang
    01219 Dresden (DE)**
  • **ECKERT, Jürgen
    64297 Darmstadt (DE)**
  • **KÜHN, Uta
    01728 Possendorf (DE)**

(74) Vertreter: **Rauschenbach, Dieter
    Bienertstrasse 15
    01187 Dresden (DE)**

(56) Entgegenhaltungen:
EP-A- 0 197 675          WO-A-00/68469
WO-A-99/49095          US-A- 4 637 967
US-A- 5 626 691

• **PATENT ABSTRACTS OF JAPAN Bd. 0072, Nr. 73 (C-198), 6. Dezember 1983 (1983-12-06) -& JP 58 153749 A (TAKESHI MASUMOTO; others: 02), 12. September 1983 (1983-09-12)**
• **PATENT ABSTRACTS OF JAPAN Bd. 2000, Nr. 09, 13. Oktober 2000 (2000-10-13) -& JP 2000 160308 A (JAPAN SCIENCE & TECHNOLOGY CORP), 13. Juni 2000 (2000-06-13)**
• **PATENT ABSTRACTS OF JAPAN Bd. 2002, Nr. 03, 3. April 2002 (2002-04-03) -& JP 2001 316784 A (TOSHIBA CORP), 16. November 2001 (2001-11-16)**
• **PATENT ABSTRACTS OF JAPAN Bd. 0155, Nr. 00 (C-0895), 18. Dezember 1991 (1991-12-18) -& JP 03 219035 A (HONDA MOTOR CO LTD), 26. September 1991 (1991-09-26)**
• **PATENT ABSTRACTS OF JAPAN Bd. 1996, Nr. 02, 29. Februar 1996 (1996-02-29) -& JP 07 252561 A (TAKESHI MASUMOTO; others: 02), 3. Oktober 1995 (1995-10-03)**
• **PATENT ABSTRACTS OF JAPAN Bd. 1997, Nr. 02, 28. Februar 1997 (1997-02-28) -& JP 08 253847 A (MASUMOTO TAKESHI; INOUE AKIHISA; UNITIKA LTD; NHK SPRING CO LTD), 1. Oktober 1996 (1996-10-01)**
• **PATENT ABSTRACTS OF JAPAN Bd. 0186, Nr. 68 (C-1289), 16. Dezember 1994 (1994-12-16) -& JP 06 264200 A (TAKESHI MASUMOTO; others: 03), 20. September 1994 (1994-09-20)**
• **RAGHVENDRA MOHAN SRIVASTAVA ET AL: "Cooling Rate Evaluation for Bulk Amorphous Aloys from Eutectic Microstructures in Casting Processes" MATERIAL TRANSACTIONS, Bd. 43, Nr. 7, 2002, Seiten 1670-1675,**

**Beschreibung**

Technisches Gebiet

Die Erfindung betrifft hochfeste und bei Raumtemperatur plastisch verformbare Formkörper aus Titanlegierungen. Derartige Formkörper sind einsetzbar als hochbeanspruchte Bauteile z. B. in der Flugzeugindustrie, der Raumfahrt und der Fahrzeugindustrie, aber auch für medizintechnische Geräte und Implantate im medizinischen Bereich, wenn hohe Anforderungen an die mechanische Belastbarkeit, die Korrosionsbeständigkeit und die Oberflächenbeanspruchung insbesondere bei kompliziert geformten Bauteilen gestellt werden.

Stand der Technik

Bekannt ist, dass bestimmte mehrkomponentige metallische Werkstoffe durch rasche Erstarrung in einen metastabilen glasartigen Zustand überführt werden können (metallische Gläser), um vorteilhafte (z. B. weichmagnetische, mechanische, katalytische) Eigenschaften zu erhalten. Meist sind diese Werkstoffe wegen der erforderlichen Abkühlrate der Schmelze nur mit geringen Abmessungen in mindestens einer Dimension z. B. dünne Bänder oder Pulver herstellbar. Damit sind sie als massiver Konstruktionswerkstoff nicht geeignet (siehe z. B. T. Masumoto, Mater. Sci. Eng. A179/180 (1994) 8-16).

Bekannt sind bestimmte Zusammensetzungsbereiche mehrkomponentiger Legierungen, in denen solche metallische Gläser auch in massiver Form, z. B. mit Abmessungen > 1 mm, durch Gießverfahren hergestellt werden können. Solche Legierungen sind z. B. Pd-Cu-Si, $Pd_{40}Ni_{40}P_{20}$. Zr-Cu-Ni-Al, La-Al-Ni-Cu (siehe z. B. T. Masumoto, Mater. Sci. Eng. A179/180 (1994) 8-16 und W.L. Johnson in Mater. Sci. Forum Vol. 225-227, S. 35-50, Transtec Publications 1996, Switzerland). Bekannt sind insbesondere metallische Gläser mit Zusammensetzungen der chemischen Formeln $Ti_{50}Ni_{25}Cu_{25}$, Ti-Be-Zr, Ti-Ni-Cu-Al und Ti-Zr-Ni-Cu, welche > 1 mm hergestellt werden können (A. Inoue et al., Mater. Lett.19,131 (1994), K. Amiya et al., Mater. Sci. Eng. A179/A180,692 (1994), L.E. Tanner et al., Scr. Met. 11, 1727 (1977), and D.V. Louzguine et al., J. Mater. Res. 14, 4426 (1999)).

Weiterhin bekannt sind metallische Glas-Formkörper in allen ihren Dimensionen > 1 mm in bestimmten Zusammensetzungsbereichen der quaternären Ti-Cu-Ni-Sn-Legierungen (T. Zhang und A. Inoue, Mater. Trans., JIM 39, 1001 (1998)).

Bekannt ist eine Zusammensetzung für eine mehrkomponentige berylliumhaltige Legierung mit der chemischen Formel $(Zr_{100-a-b}Ti_aNb_b)_{75}$ $(Be_xCu_yNi_z)_{25}$ · Dabei bezeichnen die Koeffizienten a, b die Elementanteile in Atom-% mit a = 18,34; b = 6,66 und die Koeffizienten x, y, z bezeichnen die Verhältnisanteile in Atom-% mit x : y : z = 9 : 5 : 4. Diese Legierung ist zweiphasig, sie besitzt eine hochfeste, spröde glasartige Matrix und eine duktile, plastisch verformbare dendritische krz-Phase. Dadurch tritt eine erhebliche Verbesserung der mechanischen Eigenschaften bei Raumtemperatur ein, besonders im Bereich der makroskopischen Dehnung (C.C. Hays, C.P. Kim und W.L. Johnson, Phys. Rev. Lett. 84, 13, p. 2901 - 2904, (2000)).

Zweiphasige Titanlegierungen mit einer hochfesten glasartigen Matrix und darin eingebetteter duktiler, plastisch verformbarer dendritischer krz-Phase konnten bisher nicht hergestellt werden.

Darstellung der Erfindung

Der Erfindung liegt die Aufgabe zugrunde, hochfeste und bei Raumtemperatur plastisch verformbare Formkörper aus Titanlegierungen zu schaffen, die gegenüber den genannten metallischen Gläsern makroskopische Plastizität und Verformungsverfestigung bei Umformprozessen bei Raumtemperatur besitzen, ohne dass dadurch andere Eigenschaften, wie Festigkeit, elastische Dehnung oder das Korrosionsverhalten, wesentlich beeinträchtigt werden.

Diese Aufgabe wird mit den in den Patentansprüchen angegebenen hochfesten Formkörpern gelöst.

Die erfindungsgemäßen Formkörper sind dadurch gekennzeichnet, dass diese aus einem Werkstoff bestehen, der in seiner Zusammensetzung der Formel

$$Ti_a\, E1_b\, E2_c\, E3_d\, E4_e$$

entspricht, worin

E1   aus einem Element oder mehreren Elementen der mit den Elementen Ta, Nb, Mo, Cr, W, Zr, V, Hf und Y gebildeten Gruppe,

E2   aus einem Element oder mehreren Elementen der mit den Elementen Cu, Au, Ag, Pd und Pt gebildeten Gruppe,

E3   aus einem Element oder mehreren Elementen der mit den Elementen Ni, Co, Fe, Zn, Mn gebildeten Gruppe und

(fortgesetzt)

E4     aus einem Element oder mehreren Elementen der mit den Elementen Sn, A1, Ga, Si, P, C, B, Pb und Sb gebildeten Gruppe

besteht, mit

$$a = 100-(b+c+d+e)$$

b = 0 bis 20
c = 5 bis 30
d = 5 bis 30
e = 1 bis 15
(a, b, c, d, e in Atom-%)

und mit gegebenenfalls geringen, herstellungstechnisch bedingten Zusätzen und Verunreinigungen.

Dabei weisen die Formkörper ein Gefüge mit einer homogenen Mikrostruktur auf, hauptsächlich bestehend aus einer glasartigen oder nanokristallinen Matrix mit darin eingebetteter duktiler dendritischer krz(kubischraumzentrierter)-Phase. Das Auftreten einer dritten Phase mit geringem Volumenanteil von maximal 10 % ist möglich.

Zur Realisierung besonders vorteilhafter Eigenschaften sollte der Werkstoff der Zusammensetzung $Ti_aCu_c$-$Ni_dSn_e$ entsprechen, mit a = 45-55, c = 20-25, d = 15-25 und e = 5-10 (Anteile in Atom-%).

Der Volumenanteil der gebildeten dendritischen krz-Phase in der Matrix beträgt erfindungsgemäß 20 bis 90 %, vorzugsweise 50 bis 70 %. Die Länge der Primär-Dendritenachsen liegt im Bereich von 1-100 $\mu$m und der Radius der Primär-Dendriten beträgt 0,2-2 $\mu$m.

Zur Herstellung der Formkörper wird durch Gießen der Titan-Legierungsschmelze in eine Kupferkokille das fertige Gußteil hergestellt.

Der Nachweis der dendritischen krz-Phase in der glasartigen oder nanokristallinen Matrix und die Bestimmung der Größe·und des Volumenanteils der dendritischen Ausscheidungen kann über Röntgenbeugung, Rasterelektronenmikroskopie oder Transmissionselektronenmikroskopie erfolgen.

Wege zur Ausführung der Erfindung

Die Erfindung ist nachstehend an Hand von Beispielen näher erläutert.

Beispiel 1

Eine Legierung mit der Zusammensetzung $Ti_{50}C_{U23}Ni_{20}Sn_7$ (Zahlenangaben in Atom-%) wird in eine zylinderförmige Kupferkokille mit Innendurchmesser 3 mm abgegossen. Der erhaltene Formkörper besteht aus einer teils glasartigen, teils nanokristallinen Matrix und darin eingebetteter duktiler krz-Phase. Der Volumenanteil der dendritischen Phase wird zu 50 % abgeschätzt. Dadurch wird eine Bruchdehnung von 7,5 % bei einer Bruchfestigkeit von 2010 MPa erreicht. Die elastische Dehnung an der technischen Streckgrenze (0,2 % Dehngrenze) beträgt 2,5 % bei einer Festigkeit von 1190 MPa. Der Elastizitätsmodul beträgt 85,8 GPa.

Beispiel 2

Eine Legierung mit der Zusammensetzung $Ti_{6o}Ta_{10}Cu_{14}Ni_{12}Sn_4$ (Zahlenangaben in Atom-%) wird in eine zylinderförmige Kupferkokille mit Innendurchmesser 3 mm abgegossen. Der erhaltene Formkörper besteht aus einer teils glasartigen, teils nanokristallinen Matrix und darin eingebetteter duktiler krz-Phase. Der Volumenanteil der dendritischen Phase wird zu 60 % abgeschätzt. Dadurch wird eine Bruchdehnung von 3,0 % bei einer Bruchfestigkeit von 2200 MPa erreicht. Die elastische Dehnung an der technischen Streckgrenze (0,2 % Dehngrenze) beträgt 1,0 % bei einer Festigkeit von 1900 MPa. Der Elastizitätsmodul beträgt 95,5 GPa.

**Patentansprüche**

1.   Hochfeste, bei Raumtemperatur plastisch verformbare Formkörper aus Titanlegierungen, **dadurch gekennzeich-**

**net, dass** die Formkörper aus einem Werkstoff bestehen, der in seiner Zusammensetzung der Formel

$$Ti_a E1_b E2_c E3_d E4_e$$

entspricht, worin

E1 aus einem Element oder mehreren Elementen der mit den Elementen Ta, Nb, Mo, Cr, W, Zr, V, Hf und Y gebildeten Gruppe,
E2 aus einem Element oder mehreren Elementen der mit den Elementen Cu, Au, Ag, Pd und Pt gebildeten Gruppe,
E3 aus einem Element oder mehreren Elementen der mit den Elementen Ni, Co, Fe, Zn, Mn gebildeten Gruppe und
E4 aus einem Element oder mehreren Elementen der mit den Elementen Sn, A1, Ga, Si, P, C, B, Pb und Sb gebildeten Gruppe

besteht, mit

$$a = 100-(b+c+d+e)$$

b = 0 bis 20
c = 5 bis 30
d = 5 bis 30
e = 1 bis 15
(a, b, c, d, e in Atom-%) und mit gegebenenfalls geringen, herstellungstechnisch bedingten Zusätzen und Verunreinigungen,

und dass die Formkörper ein Gefüge mit einer homogenen Mikrostruktur aufweisen, hauptsächlich bestehend aus einer glasartigen oder nanokristallinen Matrix mit darin eingebetteter duktiler dendritischer krz(kubischraumzentrierter)-Phase, wobei mit einem geringem Volumenanteil von maximal 10 % eine dritte Phase enthalten sein kann.

2. Formkörper nach Anspruch 1, **dadurch gekennzeichnet, dass** der Werkstoff eine Zusammensetzung mit b = 0-15, c = 20-25, d = 15-25 und e = 5-10 (Atom-%) aufweist.

3. Formkörper nach Anspruch 1, **dadurch gekennzeichnet, dass** der Volumenanteil der gebildeten dendritischen krz-Phase in der Matrix 20 bis 90 %, vorzugsweise 50 bis 70 % beträgt.

4. Formkörper nach Anspruch 1, **dadurch gekennzeichnet, dass** die Länge der Primär-Dendritenachsen im Bereich von 1-100 $\mu$m liegt und der Radius der Primär-Dendriten 0,2-2 $\mu$m beträgt.

**Claims**

1. High-strength, moulded titanium alloy objects which are plastically deformable at room temperature, **characterized in that** the moulded objects consist of a material which in its composition conforms to the formula

$$Ti_a E1_b E2_c E3_d E4_e$$

where

E1 consists of one or more elements selected from the group consisting of the elements Ta, Nb, Mo, Cr, W, Zr, V, Hf and Y,
E2 consists of one or more elements selected from the group consisting of the elements Cu, Au, Ag, Pd and Pt,
E3 consists of one or more elements selected from the group consisting of the elements Ni, Co, Fe, Zn, Mn, and
E4 consists of one or more elements selected from the group consisting of the elements Sn, Al, Ga, Si, P, C, B, Pb and Sb,

where

$$a = 100-(b+c+d+e)$$

b = 0 to 20
c = 5 to 30
d = 5 to 30
e = 1 to 15
(a, b, c, d, e in atom%) with or without minor manufacturing admixtures and impurities,

and **in that** the moulded objects have a fabric with a homogeneous microstructure, mainly consisting of a glassy or nanocrystalline matrix having a ductile dendritic body-centred cubic (bcc) phase embedded therein, wherein a third phase may be present in a low volume fraction of not more than 10%.

2. Moulded objects according to Claim 1, **characterized in that** the material has a composition where b = 0 - 15, c = 20 - 25, d = 15 - 25 and e = 5 - 10 (atom%).

3. Moulded objects according to Claim 1, **characterized in that** the volume fraction of the dendritic bcc phase in the matrix is 20.% to 90%, preferably 50% to 70%.

4. Moulded objects according to Claim 1, **characterized in that** the length of the primary dendrite axes is in the range from 1 - 100 $\mu$m and the radius of the primary dendrites is 0.2 - 2 $\mu$m.

**Revendications**

1. Corps moulés en alliages de titane, plastiquement déformables à température ambiante, à haute résistance mécanique,
**caractérisés en ce que**
les corps moulés sont constitués d'un matériau dont la composition correspond à la formule

$$Ti_a E1_b E2_c E3_d E4_e$$

dans laquelle

E1 représente un ou plusieurs éléments de l'ensemble formé par les éléments Ta, Nb, Mo, Cr, W, Zr, V, Hf et Y,
E2 représente un ou plusieurs éléments de l'ensemble formé par les éléments Cu, Au, Ag, Pd et Pt,
E3 représente un ou plusieurs éléments de l'ensemble formé par les éléments Ni, Co, Fe, Zn, Mn et
E4 représente un ou plusieurs éléments de l'ensemble formé des éléments Sn, Al, Ga, Si, P, C, B, Pb et Sb,

avec

$$a = 100-(b+c+d+e)$$

b = 0 à 20
c = 5 à 30
d = 5 à 30
e = 1 à 15
(a, b, c, d, e représentant des % atomiques) et éventuellement les faibles additions et impuretés découlant de la préparation,

et **en ce que** les corps moulés présentent un réseau à microstructure homogène, principalement constitué d'une matrice vitreuse ou monocristalline dans laquelle est incorporée une phase dendritique ductile cc (cubique centrée), une proportion volumique réduite d'une troisième phase, d'au plus 10 %, pouvant être présente.

**2.** Corps moulés selon la revendication 1, **caractérisés en ce que** le matériau présente une composition dans laquelle b = 0 à 15, c = 20 à 25, d = 15 à 25 et e = 5 à 10 (% atomiques).

**3.** Corps moulés selon la revendication 1, **caractérisés en ce que** la proportion volumique de la phase dendritique cc formée dans la matrice représente de 20 à 90 % et de préférence de 50 à 70 %.

**4.** Corps moulé selon la revendication 1, **caractérisé en ce que** la longueur des axes primaires des dendrites est comprise dans la plage de 1 à 100 $\mu$m et le rayon des dendrites primaires est compris dans la plage de 0,2 à 2 $\mu$m.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. Masumoto.** *Mater. Sci. Eng.,* 1994, vol. A179/180, 8-16
- **W.L. Johnson.** Mater. Sci. Forum. Transtec Publications, 1996, vol. 225-227, 35-50
- **A. Inoue et al.** *Mater. Lett.,* 1994, vol. 19, 131
- **K. Amiya et al.** *Mater. Sci. Eng.,* 1994, vol. A179/A18, 692
- **L.E. Tanner et al.** *Scr. Met.,* 1977, vol. 11, 1727
- **D.V. Louzguine et al.** *J. Mater. Res.,* 1999, vol. 14, 4426
- **T. Zhang ; A. Inoue.** *Mater. Trans., JIM,* 1998, vol. 39, 1001
- **C.C. Hays ; C.P. Kim ; W.L. Johnson.** *Phys. Rev. Lett.,* 2000, vol. 84 (13), 2901-2904